(19) Europäisches Patentamt

European Patent Office

Office européen des brevets

(11) **EP 1 694 074 A1**

(12) **EUROPEAN PATENT APPLICATION**

(43) Date of publication:
**23.08.2006 Bulletin 2006/34**

(51) Int Cl.:
***H04N 7/26*** (2006.01)

(21) Application number: **05101224.3**

(22) Date of filing: **18.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Thomson Licensing**
**92100 Boulogne-Billancourt (FR)**

(72) Inventors:
• **Francois, Edouard**
**35890, Bourg des Comptes (FR)**

• **Boisson, Guillaume**
**35000, Renners (FR)**
• **Marquant, Gwenaelle**
**35340, Liffre (FR)**

(74) Representative: **Ruellan-Lemonnier, Brigitte**
**Thomson,**
**46, Quai A. Le Gallo**
**92648 Boulogne Cedex (FR)**

(54) **Process for scalable coding of images**

(57)    The process, comprising an inter layer prediction mode to code a current macroblock of the enhancement layer from a predicted macroblock of the base layer, is characterised in that such mode comprises the following steps :

- partitioning of the current macroblock into blocks,
- calculation of a motion, for each block of the current macroblock of the enhancement layer, by taking into account motion data of colocated macroblocks of the base layer,
- merging of blocks of the current macroblock as a function of the calculated motion to give new blocks and a new partition of the macroblock,
- allocation of a motion to the new blocks according to the selected motion of the merged blocks,
- calculation of the predicted macroblock according to the new partition and motion allocated to the blocks making up the new partition.

An application is the compression of data based on the standard H264.

FIG.8

EP 1 694 074 A1

**Description**

The invention relates to a process for video coding/decoding of images, more specifically scalable video coding/decoding where several spatial video formats need to be encoded/decoded. The domain is the video compression complying, for instance, with the video coding standards of the MPEG family such as MPEG-1, MPEG-2, MPEG-4 and the recommendations of the ITU-H. 26X family (H. 261, H. 263 and extensions, H. 264).

It also relates to a video sequence bitstream generation. Said coded bitstream is constituted of encoded video data in which each data item is described by means of a bitstream syntax allowing to recognize and decode all the elements of the content of said bitstream.

The invention addresses the spatial scalability issue and proposes additional syntax for the MPEG 4 part 10 or H264. The Scalable Video Model relating to this standard, known as SVM, only addresses dyadic spatial scalability, that is, configurations where the factor between pictures width and height of two successive (high to low) spatial layers (or resolutions) equals 2. A new tool is described hereafter, providing extended spatial scalability, that is, managing configurations where:

- the factor between pictures width and height of two successive (high to low) spatial layers (or resolutions) does not necessarily equal 2;
- pictures of the higher level of resolution can contain parts (picture borders) that are not present in corresponding pictures of the low level of resolution.

In SVM3,0, Scalable Video Model version described in document "Scalable Video Model 3.0", ISO/IEC JTC 1/SC 29/WG 11 N6716, J.Reichel, M.Wien, H.Schwarz, an approach for inter-layer prediction of motion and texture data is proposed. The approach is limited to case where the low layer resolution has half width and height of the high layer resolution.

The invention relates to a process for scalable coding of images with a F1 format corresponding to an enhanced layer and with a F2 format having a lower resolution than F1, corresponding to a base layer, comprising an inter layer prediction mode to code a current macroblock of the enhancement layer from a predicted macroblock of the base layer, characterised in that it comprises the following steps :

- partitioning of the current macroblock into blocks,
- calculation of a motion, for each block of the current macroblock, by taking into account motion data of colocated macroblocks of the base layer,
- merging of blocks of the current macroblock as a function of the calculated motion to give new blocks and a new partition of the macroblock,
- allocation of a motion to the new blocks according to the selected motion of the merged blocks,
- calculation of the predicted macroblock according to the new partition and motion allocated to the blocks making up the new partition.

According to a particular embodiment, the colocated macroblocks are determined by selecting the macroblocks colocated to the pixels corresponding to each corner of the block.

According to a particular embodiment, the macroblocks have a size of 16x16 pixels and the blocks have a size of 4x4 pixels.

According to a particular embodiment, the motion data of colocated macroblocks are motion data of colocated blocks of the colocated macrobloc.

According to a particular embodiment, motion data are the picture reference indexes and corresponding motion vectors as defined in H264 standard.

According to a particular embodiment, when several reference indexes exist for a list, the one selected for the block is the minimum and in that, when several motion vector exists for the selected reference index, the calculation of the motion vector corresponds to their mean value.

According to a particular embodiment, a merging of two blocks is implemented if the motions calculated for these blocks are identical.

According to a particular embodiment, the inter layer prediction mode calculates an inter-layer texture prediction by upsampling the base layer texture and filtering it using a Lanczos-windowed sinc function.

The invention also relates to a process for decoding data of images with a F1 format corresponding to an enhanced layer and a F2 format having a lower resolution than F1, corresponding to a base layer, characterised in that it implements the following steps to calculate a predicted macroblock of a current macroblock of the enhancement layer :

- positioning of the current macrobloc of the enhancement layer on macroblocks of the upsampled base layer according to positioning coordinates for the layers,
- partitioning of the current macroblock into blocks,
- calculation of a motion, for each block of the current macroblock of the enhancement layer, by taking into account motion data of colocated macroblocks of the base layer,
- merging of blocks of the current macroblock as a function of the calculated motion to give new blocks and a new partition of the macroblock,
- allocation of a motion to the new blocks according to the selected motion of the merged blocks,
- calculation of the predicted macroblock according to the new partition and motion allocated to the blocks making up the new partition.

The invention also relates to a bitstream of data with a syntax of the MPEG type i.e. comprising headers such as a sequence header, a gop header, a picture header, a slice header... , characterised in that said slice header contains a flag indicating the availability or not of an extended spatial scalability corresponding to other scalability than dyadic spatial scalability for an inter layer prediction mode.

According to a particular embodiment, the slice header comprises fields containing coordinates of a predetermined pixel of the upsampled base layer in the current layer coordinates system.

The invention allows to extend the inter-layer prediction to generic cases where low layer and high layer pictures dimensions are not multiple of 2. New syntax elements are added to deal with generic cases when non dyadic spatial scalability appears, allowing efficient encoding/decoding of the macroblocks of the enhancement or high layer knowing the decoded base layer or low layer.

Other particular features and benefits of the invention will become clearly apparent from the following description given by way of nonlimiting example, and given in light of the appended figures which represent:

- figure 1, relations between enhancement layer and base layer,
- figure 2, macroblock overlapping between upsampled base layer picture and enhancement layer picture,
- figure 3, authorized blocks for inter layer motion vector prediction,
- figure 4, pixels of a 4x4 block b,
- figure 5, 4x4 blocks b of a 8x8 block B
- figure 6, 8x8 blocks B of a prediction macroblock,
- figure 7, authorized blocks for inter layer texture prediction,
- figure 8, co-located base layer macroblocks and 8x8 blocks of a macrobloc MB.

In the following description, terms or semantic corresponding to the standard H 264, for example the reference indices, the reference list... or used in SVM 3,0, such as base_layer_mode, qpel_refinement_mode...are not defined as definition can be found in documents ITU_T Rec. H.264 (2002E) or "Scalable Video Model 3.0" previously cited.

Also, the mathematical operators are those used in the C programming language or in the specifications of the standard, defined for example in document ITU-T Rec.H.264 (2002 E) paragraph 5.1. For example, "f' corresponds to the integer division, "%" to the remainder of the division, "(..)?0,1" has the value 0 or 1 when the equation into brackets is respectively true or false.

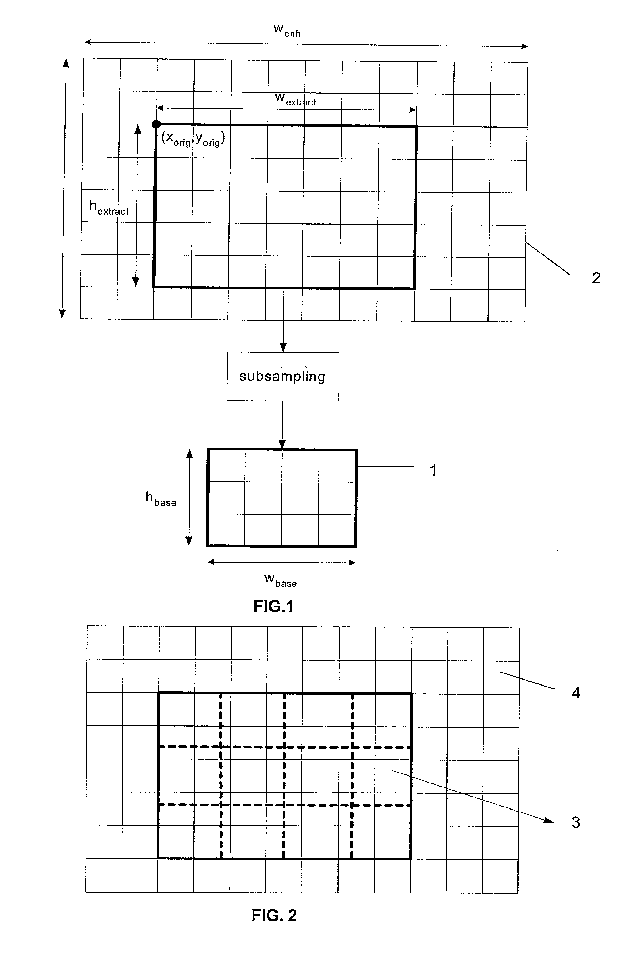

Figure 1 represents a picture within two successive spatial layers, a low layer 1, considered as base layer, and a high layer 2, considered as enhancement layer. Width and height of enhancement layer pictures are defined respectively as $w_{enh}$ and $h_{enh}$. In the same way, base layer pictures dimensions are defined as $w_{base}$ and $h_{base}$. They are a subsampled version of sub-pictures of enhancement layer pictures, of dimensions $W_{extract}$ and $h_{extract,}$ positioned at coordinates $(x_{orig}, y_{orig})$ in the enhancement layer pictures coordinates system. In addition, $W_{enh}, h_{enh}, W_{base} h_{base}, W_{extract}$ and $h_{extract}$ are constrained to be multiple of 16. The enhancement and base layer pictures are divided in macroblocks.

Upsampling factors between base layer pictures and extraction pictures in enhancement layer are respectively defined, for horizontal and vertical dimensions, as :

$$\alpha_{horiz} = W_{extract} \, / \, W_{base}$$

$$\alpha_{vertic} = h_{extract} \, / \, h_{base}$$

Parameters $(x_{orig}, y_{orig}, \alpha_{horiz}, \alpha_{vertic})$ completely define the geometrical relations between high and low layer pictures. For example, in a standard dyadic scalable version, these parameters are equal to (0,0,2,2).

In many cases a macroblock of enhancement layer may have either no base layer corresponding block, for example on borders of the enhancement layer picture, either one or several base layer corresponding macroblocks as illustrated in figure 2. In this figure, dashed lines 3 represent macroblocks of the upsampled base layer picture and solid lines 4 macroblocks of the enhancement layer picture. Consequently a different managing of the inter layer prediction than in SVM3,0 is necessary.

In the sequel, according to the semantic defined further, we will name:

$$scaled\_base\_column = x_{orig}$$

$$scaled\_base\_line = y_{orig}$$

$$scaled\_base\_width = w_{extract}$$

$$scaled\_base\_height = h_{extract}$$

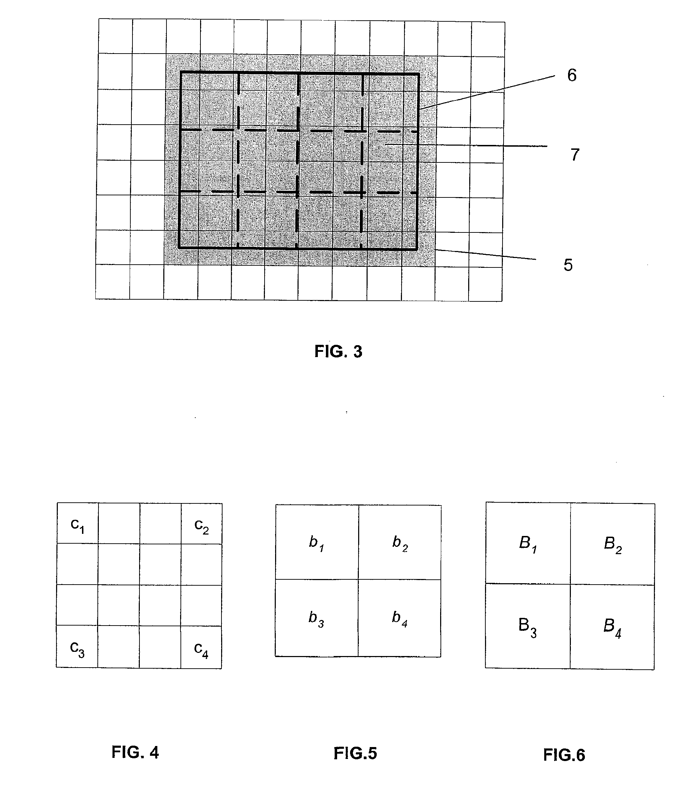

A given high layer macroblock can exploit inter-layer motion prediction using scaled base layer motion data, using either "BASE_LAYER_MODE" or "QPEL_REFINEMENT_MODE", as in case of dyadic spatial scalability. In case of using one of these two modes, the high layer macroblock is reconstructed with default motion data deduced from the base layer. These modes are only authorized for high layer macroblocks having corresponding base layer blocks, blocks corresponding, in figure 3, to the grey-colored area 5. On this figure, bold solid lines 6 represent the upsampled base layer window, bold dashed lines, the macroblocks 7 of the base layer window. This grey area 5 corresponds to macroblocks whose coordinates ($MB_x, Mb_y$) respect the following conditions:

$$MB_x >= scaled\_base\_column / 16$$

and

$$MB_x < (scaled\_base\_column + scaled\_base\_width + 15) / 16$$

and

$$MB_y >= scaled\_base\_ line / 16$$

and

$$MB_y < (scaled\_base\_ line + scaled\_base\_height + 15) / 16$$

As in SVM3,0, these macroblock modes indicate that the motion/prediction information including macroblock partitioning are directly derived from the base layer. The solution consists in constructing a prediction macroblock, *MB_pred,* inheriting motion data from base layer. When using "BASE_LAYER_MODE" mode, the macroblock partitioning as well as the reference indices and motion vectors are those of the prediction macroblock *MB_pred.* "QPEL_ REFINEMENT_MODE" is similar, but a quarter-sample motion vector refinement is achieved.

The process to derive *MB_pred* works in three steps:

- for each 4x4 block of *MB_pred,* inheritance of motion data from the base layer motion data

- partitioning choice for each 8x8 block of *MB_pred*

- mode choice for *MB_pred*

These 3 steps are described in the following paragraphs.

*Motion data block inheritance*

Let's consider a 4x4 high layer block b as represented in figure 4. The process consists in looking at the four corners of this block, identified as c1 to c4. Let (x, *y)* be the position of a corner pixel c in the high layer coordinates system. Let ($x_{base}$, $y_{base}$) the corresponding position in the base layer coordinates system, defined as follows:

$$\begin{cases} x_{base} = \left[ \dfrac{(x - x_{orig})}{\alpha_{horiz}} \right] \\ y_{base} = \left[ \dfrac{(y - y_{orig})}{\alpha_{vertic}} \right] \end{cases}$$

where [a] is the integer portion a.
Using the semantic described further, the actual formulas are as follows:

$$\begin{cases} x_{base} = \dfrac{(x - \text{scaled\_base\_column}).16.(\text{BasePicWidthInMbsMinus1} + 1)}{\text{scaled\_base\_width}} \\ y_{base} = \dfrac{(y - \text{scaled\_base\_line}).16.(\text{BasePicHeightInMbsMinus1} + 1)}{\text{scaled\_base\_height}} \end{cases}$$

BasePic_width_in_mbs_minus and BasePic_height_in_mbs_minus1 specify the size of the base layer luma picture array in units of macroblocks.
In the sequel, the co-located macroblock of pixel *(x,y)* is the base layer macroblock containing pixel ($x_{base}$, $y_{base}$). In the same way, the co-located 8x8 block of pixel (*x,y*) is the base layer 8x8 block containing pixel ($x_{base}$, $y_{base}$) and the co-located 4x4 block of pixel *(x,y)* is the base layer 4x4 block containing pixel ($x_{base}$, $y_{base}$).
The motion data inheritance process for b is the following:

- for each corner c, the reference index r(c,listx) and motion vector mv(c,x) of each list *listx* (*listx*=0 or 1) are set to those, if they exist, of the co-located base layer 4x4 block

- for each corner c,

> if no co-located macroblock exists, or if the co-located macroblock is in intra mode, then b is set as an intra block

> else, for each list *listx*

>> if none of the corners uses this list, no reference index and motion vector for this list is set to b

>> else

>>>the reference index $r_b$(*listx*) set for b is the minimum of the existing reference indices of the 4 corners:

$$r_b(\text{listx}) = \min_c\big(r(c, \text{listx})\big)$$

>>>the motion vector $mv_b$(*listx*) set for b is the mean of existing motion vectors of the 4 corners, having the reference index $r_b$(*listx*).

*Partitioning choice*

Once each 4x4 block motion data has been set, a merging process is necessary in order to determine the actual partitioning of the 8x8 block it belongs to and to avoid forbidden configurations. In the following, 4x4 blocks b of a 8x8 block B are identified as b1 to b4, as indicated in figure 5.

For each 8x8 block, the following process is applied:

- if the 4 4x4 blocks have been classified as intra blocks, B is considered as an intra block.
- else, B partitioning choice is achieved:

> The following process for assigning the same reference indices to each 4x4 block is applied:

for each list *listx*

>> if no 4x4 block uses this list, no reference index and motion vector of this list are set to B

>> else

>>> reference index $r_B$(*listx*) for B is computed as the minimum of the existing reference indices of the 4 4x4 blocks:

$$r_B(\text{listx}) = \min_b (r_b(\text{listx}))$$

>>> mean motion vector $mv_{mean}$(*listx*) of the 4x4 blocks having the same reference index $r_B$(*listx*) is computed

>>> 4x4 blocks (1) classified as intra blocks or (2) not using this list or (3) having a reference index $r_b$(*listx*) different from $r_B$(*listx*) are enforced to have $r_B$(*listx*) and $mv_{mean}$(*listx*) as reference index and motion vector.

> Then the choice of the partitioning mode for B is achieved. Two 4x4 blocks are considered as identical if their motion vectors are identical. The merging process is applied as follows:

>> if $b_1$ is identical to $b_2$ and $b_3$ is identical to b4 then

>>> if $b_1$ is identical to $b_3$ then BLK_8x8 is chosen

>>> else BLK_8x4 is chosen

>> else if $b_1$ is identical to $b_3$ and $b_2$ is identical to b4 then BLK_4x8 is chosen

>> else BLK_4x4 is chosen.

*Prediction macroblock mode choice*

A final process is achieved to determine the MB_pred mode. In the following, 8x8 blocks of the macroblock are identified as B1 to B4, as indicated in figure 6.
Two 8x8 blocks are considered as identical blocks if:

- One or both of the two 8x8 blocks are classified as intra blocks
  or

- Partitioning mode of both blocks is BLK_8x8 and reference indices and motion vectors of list0 and list1 of each 8x8 block, if they exist, are identical.

The mode choice is done using the following process:

-   if all 8x8 blocks are classified as intra blocks, then MB_pred is classified as INTRA macroblock

-   else, MB_pred is an INTER macroblock. Its mode choice is achieved as follows:

> 8x8 blocks classified as intra are enforced to BLK_8x8 partitioning. Their reference indices and motion vectors are computed as follows. Let $B_{INTRA}$ be such a 8x8 block.

for each list *listx*

>> if no 8x8 block uses this list, no reference index and motion vector of this list is assigned to $B_{INTRA}$

>> else, the following steps are applied:

>>> a reference index $r_{min}(listx)$ is computed as the minimum of the existing reference indices of the 8x8 blocks:

$$r_{min}(listx) = \min_{B}\left(r_B(listx)\right)$$

>>> a mean motion vector $mv_{mean}(listx)$ of the 8x8 blocks having the same reference index $r_{min}(listx)$ is computed

>>> $r_{min}(listx)$ is assigned to $B_{INTRA}$ and each 4x4 block of $B_{INTRA}$ is enforced to have $r_{min}(listx)$ and $mv_{mean}(listx)$ as reference index and motion vector.

> Then the choice of the partitioning mode for B is achieved. Two 8x8 blocks are considered as identical if their Partitioning mode is BLK_8x8 and reference indices and motion vectors of list0 and list1 of each 8x8 block, if they exist, are identical. The merging process is applied as follows:

>> if B1 is identical to B2 and B3 is identical to B4 then

>>> if B1 is identical to B3 then MODE_16x16 is chosen.

>>> else MODE_16x8 is chosen.

>> else if B1 is identical to B3 and B2 is identical to B4 then MODE_8x16 is chosen.

>> else MODE_8x8 is chosen.

Motion vectors scaling

A motion vector rescaling is finally applied to every existing motion vectors of the prediction macroblock MB_ pred. A Motion vector mv=(dx,dy) is scaled in the vector $mv_s=(d_{sx},d_{sy})$ using the following equations:

$$\begin{cases} d_{sx} = \left[ d_x . \alpha_{horiz} \right] \\ d_{sy} = \left[ d_y . \alpha_{vertic} \right] \end{cases}$$

Using the semantic described further, the actual formulas are as follows :

$$\begin{cases} d_{sx} = \begin{cases} \dfrac{2.d_x.\text{scaled\_base\_width} + 16.(\text{BasePicWidthInMbsMinus}1+1)}{2.16.(\text{BasePicWidthInMbsMinus}1+1)} & \text{if } d_x >= 0 \\[4mm] -\dfrac{-2.d_x.\text{scaled\_base\_width\_in\_mbs} + (\text{BasePicWidthInMbsMinus}1+1)}{2.(\text{BasePicWidthInMbsMinus}1+1)} & \text{if } d_x < 0 \end{cases} \\[14mm] d_{sy} = \begin{cases} \dfrac{2.d_y.\text{scaled\_base\_height} + 16.(\text{BasePicHeightInMbsMinus}1+1)}{2.16.(\text{BasePicHeightInMbsMinus}1+1)} & \text{if } d_y >= 0 \\[4mm] -\dfrac{-2.d_y.\text{scaled\_base\_height} + 16.(\text{BasePicHeightInMbsMinus}1+1)}{2.16.(\text{BasePicHeightInMbsMinus}1+1)} & \text{if } d_y < 0 \end{cases} \end{cases}$$

Inter-Layer texture Prediction

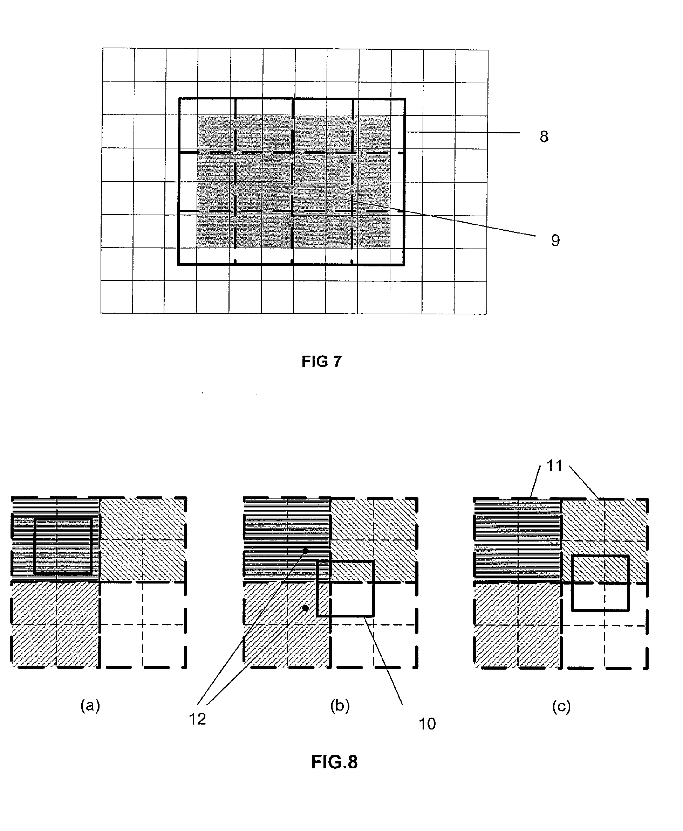

Inter layer texture prediction is based on the same principles as inter layer motion prediction. However it is only possible for macroblocks fully embedded in the scaled base layer window 8 in figure 7, that is, macroblocks corresponding to the grey-colored area 9, whose coordinates $(MB_x,Mb_y)$ respect the following conditions:

$$MB_x >= (\text{scaled\_base\_column}+15) / 16$$

and

$$MB_x < (\text{scaled\_base\_column}+ \text{scaled\_base\_width}) / 16$$

and

$$MB_y >= (\text{scaled\_base\_ line}+15) / 16$$

and

$$MB_y < (\text{scaled\_base\_ line} + \text{scaled\_base\_ height}) / 16$$

Base layer texture is upsampled, for example, by applying the two-lobed or three-lobed Lanczos-windowed sinc functions. These filters, widely used in graphics applications, described in the document titled "Filters for common resampling tasks", author Ken Turkowski, Apple Computer, April 1990, are considered to offer the best compromise in terms of reduction of aliasing, sharpness, and minimal ringing. The two-lobed Lanczos-windowed sinc function is defined as follows:

$$\text{Lanczos 2(x)} = \begin{cases} \dfrac{\sin(\pi x)}{\pi x} \dfrac{\sin(\pi \frac{x}{2})}{\pi \frac{x}{2}} & , |x| < 2 \\ 0 & , |x| \geq 2 \end{cases}$$

Simpler filters, such as bilinear filter, may also be used.

This upsampling step may be processed either on the full frame or block by block. In this latter case and for frame borders, repetitive padding is used.

Inter-Layer Intra texture Prediction

A given macroblock *MB* of current layer, high layer, can exploit inter layer intra texture prediction ("I_BL" mode) only if co-located macroblocks of the base layer exist and are intra macroblocks. Co-located base layer macroblocks are those that, once upsampled, partly or completely cover *MB.* Figure 8 illustrates three possible cases (a), (b) and (c). The bold solid line 10 corresponds to the current 16x16 macrobloc MB of the high layer. The bold dotted lines correspond to the scaled 16x16 base layer macroblocks 11: current macroblock MB may be included into 1, figure 8a, up to 4, figure 8b, scaled base layer MB.

Intra texture prediction may be used both in low pass and high pass pictures, resulting from the temporal filtering performed at the encoder (a group of pictures is temporally filtered to generate one low pass picture and several high pass pictures, corresponding to different temporal frequency bands).

For generating the intra prediction signal for high-pass macroblocks, that is, macroblocks belonging to temporal high frequency pictures, coded in I_BL mode, the co-located 8x8 blocks 12 of the base layer high-pass signal are directly de-blocked and interpolated, as in case of 'standard' dyadic spatial scalability.

Inter-Layer Residual Prediction

Inter texture prediction may be used only for high pass pictures.

A given macroblock *MB* of current layer can exploit inter layer residual prediction only if co-located macroblocks of the base layer exist and are not intra macroblocks.

Changes in Syntax and Semantics

Syntax in tabular form, where changes are highlighted, is given at the end of the specification. The main changes are the addition in the slice header syntax of a flag extended_spatial_scalability, and accordingly 4 parameters, scaled_ base_column, scaled_base_line, scaled_base_width, scaled_base_height, related to the geometrical transformation to be applied in the base layer upsampling process.

extended_spatial_scalability specifies the presence of syntax elements related to geometrical parameters for the base layer upsampling in the slice header. When this syntax element is not present, it shall be inferred to be equal to 0.

scaled_base_column corresponds to the horizontal coordinate of the upper left pixel of the upsampled base layer in the current layer coordinates system.

scaled_base_line corresponds to the vertical coordinate of the upper left pixel of the upsampled base layer in the current layer coordinates system.

scaled_base_width corresponds to the number of pixels per line of the upsampled base layer in the current layer.

scaled_base_height corresponds to the number of pixels per column of the upsampled base layer in the current layer.

BaseLayer specifies whether the current layer is the base layer, the spatial base layer. If BaseLayer is equal to 1, the current layer is the base layer.

Decoding Process

Decoding process for prediction data

Compared to SVM3.0, the following processes have to be added.

For each macroblock, the following applies.

- If base_layer_mode_flag is equal to 1 and if extended_spatial_scalability is equal to 1, the motion vector field including the macroblock partitioning is deduced using the process previously described. As in SVM3.0, if the base layer macroblock represents an intra macroblock, the current macroblock mode is set to I_BL.

- Otherwise, if base_layer_mode_flag is equal to 0 and base_layer_refinement_flag is equal to 1, the base layer refinement mode is signalled. The base_layer_refinement_flag is only present, when the base layer represents a layer with a different spatial resolution than the current layer spatial resolution. The base layer refinement mode is similar to the base layer prediction mode. The macroblock partitioning as well as the reference indices and motion vectors are derived as for the base layer prediction mode. However, for each motion vector, a quarter-sample motion vector refinement mvd_ref_lX (-1, 0, or +1 for each motion vector component) is additionally transmitted and added to the derived motion vectors.

  The rest of the process is identical as in SVM3.0.

Decoding process for subband pictures

Compared to SVM3.0, the following processes have to be added.

- If mb_type specifies an I macroblock type that is equal to I_BL and if extended_spatial_scalability is equal to 1, intra prediction signal is generated by the following process.

  > The 8x8 blocks of the base layer picture BasePic that cover partly or completely the same area as the current macroblock are referred to as base layer blocks, the corresponding macroblocks they belong to are referred to as base layer macroblocks.

  > The base layer layer blocks / macroblocks are extended by a 4-pixel border in each direction using the same process as described in section 6.3 of SVM3.0.

  > The intra prediction signal is generated by interpolating the padded and deblocked base layer blocks. The interpolation is performed using the upsampling process previously described.

  The rest of the process is identical as in SVM3.0.

- Otherwise, if mb_type does not specify an I macroblock mode and if extended_spatial_scalability is equal to 1, and if residual_prediction_flag is equal to 1, the following applies.

  > The residual signal of the base layer blocks is upsampled and added to the residual signal of the current macroblock. The interpolation filter is not applied across boundaries between transform blocks. The interpolation is performed using the upsampling process previously described.

## Sequence parameter set RBSP syntax

| seq_parameter_set_rbsp( ) { | C | Descriptor |
|---|---|---|
| profile_idc | 0 | u(8) |
| constraint_set0_flag | 0 | u(1) |
| constraint_set1_flag | 0 | u(1) |
| constraint_set2_flag | 0 | u(1) |
| constraint_set3_flag | 0 | u(1) |
| reserved_zero_4bits /* equal to 0 */ | 0 | u(4) |
| level_idc | 0 | u(8) |
| seq_parameter_set_id | 0 | ue(v) |
| if( profile_idc == 100 \|\| profile_idc == 110 \|\|     profile_idc == 122 \|\| profile_idc == 144 \|\|     profile_idc == 83 ) ) { | | |
| chroma_format_idc | 0 | ue(v) |
| if( chroma_format_idc == 3 ) | | |
| residual_colour_transform_flag | 0 | u(1) |
| bit_depth_luma_minus8 | 0 | ue(v) |
| bit_depth_chroma_minus8 | 0 | ue(v) |
| qpprime_y_zero_transform_bypass_flag | 0 | u(1) |
| seq_scaling_matrix_present_flag | 0 | u(1) |
| if( seq_scaling_matrix_present_flag ) | | |
| for( i = 0; i < 8; i++ ) { | | |
| seq_scaling_list_present_flag[ i ] | 0 | u(1) |
| if( seq_scaling_list_present_flag[ i ] ) | | |
| if( i < 6 ) | | |
| scaling_list( ScalingList4x4[ i ], 16,           UseDefaultScalingMatrix4x4Flag[ i ]) | 0 | |
| else | | |
| scaling_list( ScalingList8x8[ i − 6 ], 64,           UseDefaultScalingMatrix8x8Flag[ i − 6 ] ) | 0 | |
| } | | |
| } | | |
| log2_max_frame_num_minus4 | 0 | ue(v) |
| pic_order_cnt_type | 0 | ue(v) |
| if( pic_order_cnt_type == 0 ) | | |
| log2_max_pic_order_cnt_lsb_minus 4 | 0 | ue(v) |
| else if( pic_order_cnt_type == 1 ) { | | |
| delta_pic_order_always_zero_flag | 0 | u(1) |
| offset_for_non_ref_pic | 0 | se(v) |
| offset_for_top_to_bottom_field | 0 | se(v) |
| num_ref_frames_in_pic_order_cnt_cycle | 0 | ue(v) |
| for( i = 0; i < num_ref_frames_in_pic_order_cnt_cycle; i++ ) | | |
| offset_for_ref_frame[ i ] | 0 | se(v) |
| } | | |

| | | |
|---|---|---|
| **num_ref_frames** | 0 | ue(v) |
| **gaps_in_frame_num_value_allowed_flag** | 0 | u(1) |
| **pic_width_in_mbs_minus1** | 0 | ue(v) |
| **pic_height_in_map_units_minus1** | 0 | ue(v) |
| **frame_mbs_only_flag** | 0 | u(1) |
| if( !frame_mbs_only_flag ) | | |
|    **mb_adaptive_frame_field_flag** | 0 | u(1) |
| **direct_8x8_inference_flag** | 0 | u(1) |
| **frame_cropping_flag** | 0 | u(1) |
| if( frame_cropping_flag ) { | | |
|    **frame_crop_left_offset** | 0 | ue(v) |
|    **frame_crop_right_offset** | 0 | ue(v) |
|    **frame_crop_top_offset** | 0 | ue(v) |
|    **frame_crop_bottom_offset** | 0 | ue(v) |
| } | | |
| if( ! BaseLayer ) { | | |
|    extended_spatial_scalability | 2 | u(1) |
|    if( extended_spatial_scalability != 0 ) { | | |
|      scaled_base_column | 2 | ue(v) |
|      scaled_base_line | 2 | ue(v) |
|      scaled_base_width | 2 | ue(v) |
|      scaled_base_height | 2 | ue(v) |
|    } | | |
| } | | |
| **vui_parameters_present_flag** | 0 | u(1) |
| if( vui_parameters_present_flag ) | | |
|    vui_parameters( ) | 0 | |
| rbsp_trailing_bits( ) | 0 | |
| } | | |

# Macroblock layer in scalable extension syntax

| | C | Descriptor |
|---|---|---|
| macroblock_layer_in_scalable_extension( ) { | | |
| if( base_layer_id_plus1 ! = 0 && adaptive_prediction_flag ) { | | |
| **base_layer_mode_flag** | 2 | ae(v) |
| if( ! base_layer_mode_flag && (HalfResolutionBaseLayer ‖ extended_spatial_scalability) && ! IntraBaseLayerMacroblock ) | | |
| **base_layer_refinement_flag** | 2 | ae(v) |
| } | | |
| if( ! base_layer_mode_flag && ! base_layer_refinement_flag ) { | | |
| **Mb_type** | 2 | ae(v) |
| if( mb_type == I_NxN && base_layer_id_plus1 != 0 ) | | |
| **intra_base_flag** | 2 | ae(v) |
| } | | |
| if( MbType == I_PCM ) { | | |
| while( !byte_aligned( ) ) | | |
| **pcm_alignment_zero_bit** | 2 | f(1) |
| for( i = 0; i < 256; i++ ) | | |
| **pcm_sample_luma[ i ]** | 2 | u(v) |
| for( i = 0; i < 2 * MbWidthC * MbHeightC; i++ ) | | |
| **pcm_sample_chroma[ i ]** | 2 | u(v) |
| } else { | | |
| NoSubMbPartSizeLessThan8x8Flag = 1 | | |
| if( MbType != I_NxN && MbType != I_BL && MbPartPredMode( MbType, 0 ) != Intra_16x16 && NumMbPart( MbType ) == 4 ) { | | |
| if( ! base_layer_mode_flag ) | | |
| sub_mb_pred_in_scalable_extension( MbType ) | 2 | |
| for( mbPartIdx = 0; mbPartIdx < 4; mbPartIdx++ ) | | |
| if( SubMbType[ mbPartIdx ] != B_Direct_8x8 ) { | | |
| if( NumSubMbPart( SubMbType[ mbPartIdx ] ) > 1 ) | | |
| NoSubMbPartSizeLessThan8x8Flag = 0 | | |
| } else if( !direct_8x8_inference_flag ) | | |
| NoSubMbPartSizeLessThan8x8Flag = 0 | | |
| } else { | | |
| if( transform_8x8_mode_flag && MbType == I_NxN ) | | |
| **transform_size_8x8_flag** | 2 | ae(v) |
| mb_pred_in_scalable_extension ( MbType ) | 2 | |
| } | | |
| if( MbPartPredMode( MbType, 0 ) != Intra_16x16 ) { | | |
| **coded_block_pattern** | 2 | ae(v) |

| | | |
|---|---|---|
| if( CodedBlockPatternLuma > 0  &&<br>    transform_8x8_mode_flag  &&  MbType != I_NxN  &&<br>    NoSubMbPartSizeLessThan8x8Flag  &&<br>    !( MbPartPredMode( MbType, 0 )  = =  B_Direct_16x16  &&<br>      !direct_8x8_inference_flag ) ) | | |
| **transform_size_8x8_flag** | 2 | ae(v) |
| } | | |
| if( CodedBlockPatternLuma > 0  ||  CodedBlockPatternChroma > 0  ||<br>    MbPartPredMode( MbType, 0 )  = =  Intra_16x16 ) { | | |
| **mb_qp_delta** | 2 | ae(v) |
| residual_in_scalable_extension( ) | 3 \| 4 | |
| } | | |
| } | | |
| } | | |

**Claims**

1.  Process for scalable coding of images with a F1 format (2) corresponding to an enhanced layer and with a F2 format (1) having a lower resolution than F1, corresponding to a base layer, comprising an inter layer prediction mode to code a current macroblock of the enhancement layer from a predicted macroblock of the base layer, **characterised in that** it comprises the following steps :

    - partitioning of the current macroblock into blocks,
    - calculation of a motion, for each block of the current macroblock, by taking into account motion data of colocated macroblocks of the base layer,
    - merging of blocks of the current macroblock as a function of the calculated motion to give new blocks and a new partition of the macroblock,
    - allocation of a motion to the new blocks according to the selected motion of the merged blocks,
    - calculation of the predicted macroblock according to the new partition and motion allocated to the blocks making up the new partition.

2.  Process according to claim 1, **characterised in that** the colocated macroblocks are determined by selecting the macroblocks colocated to the pixels corresponding to each corner of the block.

3.  Process according to claim 1, **characterised in that** the macroblocks have a size of 16x16 pixels and the blocks have a size of 4x4 pixels.

4.  Process according to claim 1, **characterised in that** the motion data of colocated macroblocks are motion data of colocated blocks of the colocated macrobloc.

5.  Process according to claim 1, **characterised in that** motion data are the picture reference indexes and corresponding motion vectors as defined in H264 standard.

6.  Process according to claim 5, **characterised in that**, when several reference indexes exist for a list, the one selected for the block is the minimum and **in that**, when several motion vector exists for the selected reference index, the calculation of the motion vector corresponds to their mean value.

7.  Process according to claim 1, **characterised in that** a merging of two blocks is implemented if the motions calculated for these blocks are identical.

8.  Process according to claim 1, **characterised in that** the inter layer prediction mode calculates an inter-layer texture prediction by upsampling the base layer texture and filtering it using a Lanczos-windowed sinc function.

9. Process for decoding data of images with a F1 format (2) corresponding to an enhanced layer and a F2 format (1) having a lower resolution than F1, corresponding to a base layer, **characterised in that** it implements the following steps to calculate a predicted macroblock of a current macroblock of the enhancement layer:

- positioning of the current macro bloc (10) of the enhancement layer on macroblocks (11) of the upsampled base layer according to positioning coordinates for the layers,
- partitioning of the current macroblock into blocks,
- calculation of a motion, for each block of the current macroblock of the enhancement layer, by taking into account motion data of colocated macroblocks of the base layer,
- merging of blocks of the current macroblock as a function of the calculated motion to give new blocks and a new partition of the macroblock,
- allocation of a motion to the new blocks according to the selected motion of the merged blocks,
- calculation of the predicted macroblock according to the new partition and motion allocated to the blocks making up the new partition.

10. Bitstream of data with a syntax of the MPEG type i.e. comprising headers such as a sequence header, a gop header, a picture header, a slice header... , **characterised in that** said slice header contains a flag indicating the availability or not of an extended spatial scalability corresponding to other scalability than dyadic spatial scalability for an inter layer prediction mode.

11. Bitstream according to claim 10, **characterised in that** the slice header comprises fields containing coordinates of a predetermined pixel of the upsampled base layer in the current layer coordinates system.

FIG.1

FIG. 2

**FIG. 3**

**FIG. 4**

**FIG.5**

**FIG.6**

**FIG 7**

**FIG.8**

(a)

(b)

(c)

**European Patent Office**

# EUROPEAN SEARCH REPORT

Application Number

EP 05 10 1224

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | "description of core experiments in SVC" ISO/IEC JTC1/SC29/WG11/N6898, January 2005 (2005-01), XP002340411 Hong Kong * paragraph [CE10] * ----- | 1-11 | H04N7/26 |
| | | | TECHNICAL FIELDS SEARCHED (Int.Cl.7) |
| | | | H04N |

The present search report has been drawn up for all claims

| Place of search | Date of completion of the search | Examiner |
|---|---|---|
| Berlin | 11 August 2005 | Raeymaekers, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)